# FASCICULE DE BREVET EUROPEEN

(11) **EP 1 708 812 B1**
(45) Date de publication et mention de la délivrance du brevet: **25.03.2009**
(21) Numéro de dépôt: 05717656.2
(22) Date de dépôt: 07.01.2005
(51) Int. Cl.: B01J 35/00, F21V 3/04, C03C 17/23

(54) **DISPOSITIF D'ECLAIRAGE AUTONETTOYANT**
SELBSTREINIGUNGS-BELEUCHTUNGSVORRICHTUNG
SELF-CLEANING LIGHTING DEVICE

(30) Priorité: 07.01.2004 FR 0400100
(43) Date de publication de la demande: 11.10.2006
(73) Titulaire: SAINT-GOBAIN GLASS FRANCE, 92400 Courbevoie (FR)
(72) Inventeur: GUENEAU, Léthicia, F-94300 VINCENNES (FR); BOUIGEON, Christian, F-77510 SABLONNIERES (FR); TARIEL, Hugues, F-77120 COULOMMIERS (FR); RONDET, Mauricette, F-94400 VITRY SUR SEINE (FR)
(74) Mandataire: Teyssedre, Laurent
(86) Numéro de dépôt international: PCT/FR2005/050009
(87) Numéro de publication internationale: WO 2005/070540

(56) Documents cités:
- EP-A- 0 816 466
- EP-A- 0 887 104
- EP-A- 1 066 878
- WO-A-01/40705
- WO-A-94/07807
- WO-A-97/10186
- US-A1- 2002 147 108
- PATENT ABSTRACTS OF JAPAN vol. 1998, no. 01, 30 janvier 1998 (1998-01-30) & JP 09 237511 A (NIPPON DORO KODAN;TOSHIBA LIGHTING & TECHNOL CORP), 9 septembre 1997 (1997-09-09)
- PATENT ABSTRACTS OF JAPAN vol. 1995, no. 07, 31 août 1995 (1995-08-31) & JP 07 111104 A (AKIRA FUJISHIMA;OTHERS: 01), 25 avril 1995 (1995-04-25)

## Description

La présente invention concerne un dispositif d'éclairage du type soumis aux pollutions atmosphériques, principalement organiques.

Le document EP 0 887 104 B1 décrit le principe général d'un revêtement de TiO₂ sur le couvercle translucide de protection d'un dispositif d'éclairage ; TiO₂, notamment sous forme cristallisée anatase, présente une activité photocatalytique, c'est-à-dire une aptitude à catalyser des oxydations radicalaires sous un rayonnement UV. Des résidus d'hydrocarbures provenant des gaz d'échappement d'automobiles par exemple, peuvent être dégradés de la sorte en particules plus petites, moins collantes et moins grasses que les hydrocarbures de départ.

TiO₂ a d'autre part un caractère hydrophile : sur TiO₂, l'eau se dépose sous forme d'un film susceptible de garantir la meilleure répartition, dissolution puis élimination par effet hydrodynamique des produits de dégradation susmentionnés.

Il y a donc, de manière connue de EP 850 204 B1 notamment, synergie entre la catalyse d'oxydations radicalaires et l'hydrophilie de TiO₂, pour la production d'un effet autonettoyant, très déterminant quand le substrat revêtu est un vitrage, puisqu'ainsi est préservée durablement la meilleure qualité optique de transparence.

EP 887 104 B1 cite des grandes familles de procédés pour la préparation de TiO₂ ; de manière plus détaillée est cité le traitement thermique à 650-800°C pendant 30 s. à 5 min - traitement de trempe classique d'une feuille de verre - d'une solution d'alkoxyde de titane.

Un tel procédé vise à produire TiO₂ principalement sous forme cristallisée anatase, en vue d'une application sur couvercles translucides de protection de lampes de tunnel.

Les inventeurs ont également étudié ce domaine d'application, et réalisé que l'efficacité d'un revêtement autonettoyant sur lampes de tunnel dépend notamment de la position dans le tunnel (éloignement des extrémités du tunnel) et de la nature de la source lumineuse, en particulier du fait que cette source a ou n'a pas de composante UVA (longueur d'onde de 315-400 nm).

En effet, ce sont essentiellement ces longueurs d'ondes qui sont aptes à activer TiO₂ cristallisé anatase.

A proximité d'une extrémité du tunnel, la quantité d'UVA résiduel peut être suffisante en vue de l'activation photocatalytique de TiO₂. D'autre part, la source d'illumination de la lampe elle-même peut avoir une composante UVA, dont une partie suffisante pour activer TiO₂ soit transmissible à travers le couvercle translucide, jusqu'à sa surface en contact avec l'atmosphère du tunnel ; c'est le cas des lampes du type fluorescentes.

Par contre, quand la distance aux deux extrémités du tunnel est importante et que la lumière émise par la lampe n'a pas ou peu de composante UVA, ce qui est le cas des lampes au sodium par exemple, le procédé de préparation de TiO₂ précité ne permet pas d'obtenir un produit à activité photocatalytique suffisamment élevée pour que l'effet autonettoyant désiré et utilisable soit constaté, à moins que des conditions opératoires particulières et non divulguées de ce procédé de préparation ne le permettent.

Pour résoudre ce problème, l'invention a pour objet un procédé de fabrication d'un dispositif d'éclairage comprenant une source de lumière et une paroi laissant passer une partie au moins du rayonnement émis par ladite source, ladite paroi étant essentiellement constituée de verre trempé de telle sorte qu'une surface de 50 x 50 mm se casse en 40 morceaux au moins, et étant revêtue sur une partie au moins d'une au moins de ses deux faces d'une couche photocatalytiquement active comprenant TiO₂, laquelle est formée en structure mésoporeuse par voie sol-gel comprenant :
- la préparation d'une composition liquide comprenant au moins un précurseur du matériau essentiellement minéral constituant la structure mésoporeuse de ladite couche et au moins un agent structurant organique,
- la précipitation du précurseur autour de l'agent structurant organique et la croissance de molécules dérivées du précurseur,
- l'ajout dans la composition liquide de nanoparticules ou de cristallites élémentaires d'oxyde de titane éventuellement dopé, de diamètres compris entre 0,5 et 100 nm,
- l'application de la composition sur la surface à revêtir,
- l'élimination de l'agent structurant organique, les cristallites d'oxyde de titane étant incorporées dans la structure mésoporeuse tout en y préservant essentiellement leur intégrité, plusieurs d'entres elles pouvant y être agrégées en nanoparticules,
ledit procédé étant tel que ne sont pas mises en oeuvre des températures supérieures à 250 °C, de manière à préserver une trempe classique de verre.

L'invention a également pour objet le dispositif d'éclairage susceptible d'être obtenu par le procédé selon l'invention.

Le dispositif d'éclairage selon l'invention, qui comprend une source de lumière et une paroi laissant passer une partie au moins du rayonnement émis par ladite source, ladite paroi étant revêtue sur une partie au moins d'une au moins de ses deux faces, d'une couche photocatalytiquement active, est caractérisé en ce que dans les conditions de plus faible illumination, l'activité photocatalytique de ladite couche est suffisamment élevée pour dégrader et réduire les salissures organiques en particules aisément éliminables, qui n'adhèrent pas à ladite couche, et/ou pour conférer à ladite couche un caractère hydrophile.

Les conditions de plus faible illumination font ici référence au fait que la couche photocatalytiquement active ne reçoit d'UVA ni de l'atmosphère extérieure au dispositif d'éclairage, ni de la source d'éclairage qui ne comporte pas ou peu de composante UVA.

Les inventeurs mettent ainsi à disposition des lampes munies, sur leur surface en contact avec l'atmosphère ambiante en particulier, d'une couche à activité photocatalytique si haute que, même sous faible illumination à longueurs d'ondes autres que UVA, telles que lumière visible, UVB, elles ont la propriété de dégrader les vapeurs d'hydrocarbures grasses et collantes en fines particules, poussières non adhérentes, éliminables par effet aérodynamique (très faible courant d'air) ou hydrodynamique (aspersion de liquide).

Cette très haute activité photocatalytique se manifeste aussi par un caractère hydrophile marqué : cette propriété également appelée mouillabilité, observée dans le cadre de l'invention, traduit aussi le fait que les salissures éventuellement présentes sont moins grasses, et sont des produits de dégradation radicalaire des salissures présentes sur une lampe non revêtue de la couche active.

La paroi du système d'éclairage prend des formes habituelles : sensiblement plane, plus ou moins bombée voire avec angles vifs, selon ce que permettent les matériaux et les procédés de fabrication employés.

Selon un critère d'activité photocatalytique minimale, bien supérieure à celle présentée par la plupart des couches de TiO₂ photocatalytique connues, la couche selon l'invention comprend de préférence TiO₂ et son activité photocatalytique sous un rayonnement de longueurs d'ondes centrées sur 365 nm et de puissance 50 W/m², induit une vitesse de disparition d'acide palmitique déposé sur ladite couche, déterminée par mesure du flou et rapportée à la quantité de TiO₂, d'au moins 10 nm.h⁻¹.µg⁻¹.cm².

La paroi revêtue du dispositif d'éclairage est essentiellement constituée de verre trempé de telle sorte qu'une surface de 50 x 50 mm se casse en 40 morceaux au moins (norme R 43 pour verre trempé automobile), notamment plus de 60 morceaux. Ce choix garantit une transmission maximale de la lumière émise, ainsi que la sécurité du public en cas de bris. Cette sécurité serait affectée par un bris en un petit nombre de morceaux, allant alors de pair de manière connue, avec une forme plus tranchante des bords de ceux-ci.

Le problème de migration des alcalins du verre (notamment Na) à sa surface, susceptible de se produire en cas d'échauffement - par exemple dû à la source d'éclairage, doit être pris en considération. Comme traité dans le document EP 850 204 B1, les alcalins affectent l'activité photocatalytique d'un revêtement de TiO₂. Un premier moyen pour y remédier, selon l'invention, consiste en ce qu'au moins dans une zone de sa surface orientée vers ladite couche photocatalytiquement active, ladite paroi en verre ne comporte pas d'oxydes alcalins et alcalino-terreux en proportion totale excédant 15 % en poids, ni d'oxyde de sodium en proportion excédant 10 % en poids.

Du verre silicosodocalcique ainsi désalcalinisé est obtenu par des traitements mettant en oeuvre des techniques variées, notamment électriques telles que décharge couronne, comme décrit dans les documents WO 94/07806-A1 et WO 94/07807-A1.

Une couche notamment à base de silicium est avantageusement intercalée entre ladite paroi et ladite couche photocatalytiquement active ; il s'agit d'une couche barrière à la diffusion des alcalins du verre, constituant une seconde solution au problème sus-mentionné : couche intercalaire en silice et dérivés tels qu'oxycarbure ou oxynitrure de silicium, SiOₓ avec x < 2 préparé par CVD thermique sur ruban de verre flotté supporté par le bain d'étain fondu, par technique sous vide telle que magnétron, par voie sol-gel, etc.

L'effet antisalissure étant corrélé, de manière connue, à l'épaisseur de la couche active pour une composition photocatalytiquement active fixée, cette épaisseur est avantageusement comprise entre 100 et 1000 nm, et la densité surfacique de la couche en TiO₂ entre 1 et 100 ; de préférence 2 et 65 µg/cm².

Pour bénéficier au mieux de la synergie entre l'aptitude à catalyser les oxydations radicalaires et le caractère hydrophile, le dispositif d'éclairage de l'invention comprend avantageusement un moyen d'aspersion de liquide sur la couche active, ce qui est d'ailleurs déjà prévu sur les phares de certains véhicules automobiles, par exemple, en l'absence de couche photocatalytique.

De préférence, la paroi translucide du dispositif d'éclairage est revêtue au moins sur sa face opposée à ladite source de lumière, de la couche photocatalytiquement active. C'est en effet le problème de la pollution des surfaces extérieures du dispositif d'éclairage qui est le plus important (pollution atmosphérique) et que l'on entend résoudre de manière privilégiée dans le cadre de l'invention.

Cependant, dans la mesure où la source de lumière est protégée dans une enceinte qui peut n'être pas étanche, la face de ladite paroi orientée vers cette source de lumière peut être accessible à une certaine pollution organique. Il n'est donc pas exclu de revêtir cette face d'une couche photocatalytiquement active. Dans ce cas, la proportion du rayonnement de la source de lumière susceptible d'activer la couche est beaucoup plus importante que pour une couche sur la face opposée, une proportion plus ou moins importante du rayonnement n'étant pas transmise à travers la paroi.

Des résultats excellents sont obtenus tout particulièrement avec une couche active comprenant TiO₂ dopé par Fe, Nb, Ta, Pt, Rh, Ag, Pd, Sn, Cd, W, Ce, Zr, Cu, Ru, Mo, Al, Bi, V, Co et/ou Ni, éventuellement leurs oxydes et/ou sels, notamment sous forme particulaire de dimensions plus petites que celles des particules de TiO₂ et en mélange intime ou alliage avec celles-ci.

Le dopage amplifie le phénomène photocatalytique dû à l'oxyde de titane, en augmentant sa bande d'absorption et/ou en augmentant le nombre de porteurs de charges et/ou en augmentant le rendement et la cinétique des réactions photocatalytiques.

L'élément dopant peut consister en petites particules intercalées entre les cristallites d'oxyde de titane agrégées en nanoparticules, c'est-à-dire intégrées à celles-ci, ou en petites particules réparties à la surface extérieure des nanoparticules de TiO₂, voire en couche fine nappant la couche photocatalytiquement active.

Les procédés sol-gel sont particulièrement bien adaptés à des dépôts sur paroi de formes complexes.

De préférence, la température n'excède pas 250 °C dans la mise en oeuvre du procédé selon l'invention, de manière à préserver une trempe classique de verre. Ainsi, l'étape d'élimination de l'agent structurant peut consister en un chauffage à 250 °C pendant 2 heures, ou bien une irradiation aux UVA à température ambiante.

D'autres objets de l'invention sont :
- une paroi à base de verre destinée au dispositif d'éclairage décrit précédemment, et
- l'application du dispositif d'éclairage ci-dessus à l'éclairage d'un tunnel, l'éclairage public, des pistes d'aéroport, ou à des phares ou feux de signalisation de véhicules de transport terrestres, aquatiques ou aériens, notamment de véhicules automobiles, ainsi qu'à l'éclairage d'intérieur.

L'invention est illustrée par l'exemple ci-dessous.

### EXEMPLE

On dépose sur le verre sous forme encore d'un ruban de verre float , une sous-couche à base d'oxycarbure de silicium noté par commodité SiOC (sans préjuger du taux réel d'oxygène et de carbone dans le revêtement). Cette sous-couche est déposée par CVD à partir de précurseurs Si, en particulier d'un mélange de SiH₄ et d'éthylène en dilution dans de l'azote, à l'aide d'une buse disposée au-dessus et transversalement au ruban de verre float d'une ligne de production de verre plat, dans l'enceinte float, quand le verre est encore à une température d'environ 550 à 600°C. Le revêtement obtenu a une épaisseur d'environ 50 nm et un indice de réfraction d'environ 1,55. On découpe des échantillons de verre float muni de sa sous-couche SiOC barrière aux alcalins ainsi obtenu aux dimensions d'un couvercle de lampe de tunnel ; ces échantillons sont lavés, rincés, séchés et soumis à un traitement UV ozone pendant 45 min.

Lorsque le verre est soumis à un bombage/trempe, une alternative à la sous-couche SiOC par CVD dans le float, est une couche SiO₂ par sol-gel en reprise, sur verre bombé/trempé, pratiquement à froid ou à température n'excédant pas 250 °C permettant de garder le bénéfice de la trempe.

Cette couche est en effet équivalente à SiOC par CVD dans la fonction barrière à la diffusion des alcalins.

On forme sur la sous-couche un revêtement à structure mésoporeuse.

La composition liquide de traitement est obtenue en mélangeant dans une première étape 22,3 ml de tétraéthoxysilane, 22,1 ml d'éthanol absolu, 9 ml de HCl dans de l'eau déminéralisée (pH 1,25) jusqu'à ce que la solution devienne limpide, puis en plaçant le ballon au bain marie à 60°C pendant 1 h.

Dans une deuxième étape, on ajoute au sol obtenu précédemment une solution d'un copolymère blocs polyoxyéthylène-polyoxypropylène commercialisé par la société BASF sous la marque enregistrée Pluronic PE6800 (masse molaire 8000), en proportions telles que le rapport molaire PE6800/Si = 0,01. Ceci est obtenu en mélangeant 3,78 g de PE6800, 50 ml d'éthanol et 25 ml du sol.

Les nanoparticules de TiO₂ cristallisées anatase et de taille 50 nm environ sont ajoutées à la composition liquide ainsi obtenue, juste avant le dépôt sur échantillon. Le dépôt se fait par spin coating en quantité de départ de 3 ml par échantillon. (D'autres techniques de dépôt équivalentes sont le dip coating, la pulvérisation, l'enduction laminaire, le roll coating, le flow coating...)

Les échantillons sont ensuite chauffés à 250 °C pendant 2 heures.

Les pores du revêtement ainsi formé ont une taille de 4-5 nm.

On vérifie par analyse SIMS du revêtement à structure mésoporeuse que le rapport atomique Ti/Si est exactement identique à celui de la composition liquide de départ. L'analyse SIMS permet également de vérifier que les nanoparticules sont réparties de façon homogène dans les trois dimensions du revêtement.

L'épaisseur E des revêtements en nm est mesurée à partir de profils SIMS et de clichés MEB.

La quantité de TiO₂ en µg/cm² est évaluée par fluorescence X.

On mesure l'activité photocatalytique de la façon suivante :
1. - test réalisé sur environ 15 cm² de revêtement ;
2. - pesée de l'échantillon et mesure de l'épaisseur du substrat, de la transmission lumineuse T_{L} et du flou Td (tous deux en %) ;
3. - dépôt par spray d'une solution d'acide palmitique (8 grammes d'acide pour 1 l de chloroforme), avec une distance verre/spray de 20 cm, sur substrat vertical, et 3 à 4 passages successifs ;
4. - pesée de l'échantillon après dépôt de l'acide palmitique pour évaluer l'épaisseur d'acide palmitique déposée en nanomètres ;
5. - mesure de la transmission lumineuse T_{L} et du flou Td après dépôt ;
6. - mesure de la variation du flou en fonction du temps d'irradiation sous UVA d'intensité environ 50W/m²;
7. - détermination graphique du temps au bout duquel le flou a diminué de 50% : temps appelé T_{1/2} (disparition) ;
8. - évaluation de l'activité photocatalytique du revêtement en vitesse de disparition de l'acide palmitique v (en nm/h), qui est définie de la façon suivante :

v(nm/h) = (épaisseur d'acide palmitique (nm)) / (2 x T_{½} (disparition (h))

On mesure également la valeur de l'activité photocatalytique ramenée à la quantité de TiO₂ dans le revêtement. Enfin, on indique les propriétés optiques de réflexion lumineuse RI et de flou Td (en %).

Le rapport Ti/Si est égal à 1.

On obtient :
E = 454 nm
TiO₂ = 33,3 µg/cm²
V = 620 nm/h
V/TiO₂ = 18 nm.h⁻¹.µg⁻¹.cm²
Rₗ = 9,7 %
T_{d} = 0,3 %

Deux lampes de tunnel au sodium, ne rayonnant pratiquement pas d'UVA, et deux du type fluorescentes, sont équipées d'un couvercle en verre traité selon l'exemple.

Deux lampes de chaque type précité sont équipées d'un couvercle en verre float non traité.

On place séparément pendant 84 jours une lampe de chaque type avec couvercle en verre traité, et une avec couvercle en verre non traité en zone d'entrée de tunnel d'une part, en zone centrale de tunnel recevant quasiment pas ou très peu d'UVA de l'atmosphère extérieure.

On veille lors du démontage que les verres traités ne soient pas exposés aux UVA non présents dans le tunnel.

Les lampes ne sont pas mises sous tension en permanence, le tunnel étant rarement éclairé à 100 %, mais 9 h 30 par jour en moyenne.

Les verres traités sont parfaitement mouillants à l'installation.

Les couvercles sont examinés de la façon suivante :
- observations visuelles de la pollution ;
- relevé sur un chiffon des poussières déposées sur une surface de 5 cm² : révélateur de l'état d'encrassement, et permet d'appréhender la facilité de nettoyage (fonction « easy to clean ») ;
- évaluation de l'hydrophilie en déposant quelques gouttes d'eau désionisée à la surface du verre.

Les résultats sont consignés dans les tableaux ci-dessous :

**Tableau 1 : Expertise en zone d'entrée pour les 2 types de lampes**

| **Zone d'entrée** | Lampe fluo | | Lampe sodium | |
|---|---|---|---|---|
| | **Traité** | **Non traité** | **Traité** | **Non traité** |
| Observations visuelles | Peu de poussières | Présence de poussières qui génèrent un voile | Peu de poussières | Présence de poussières qui génèrent un voile |
| Test au chiffon | Peu sale | Sale | Peu sale | Sale |
| Hydrophilie | Mouillant | Non mouillant | Mouillant | Mouillant |

**Tableau 2 : Expertise en zone centrale pour les 2 types de lampes**

| **Zone centrale** | Lampe fluo | | Lampe sodium | |
|---|---|---|---|---|
| | **Traité** | **Non traité** | **Traité** | **Non traité** |
| Observations visuelles | Présence de poussières qui génèrent un voile | Présence de poussières qui génèrent un voile + important que sur verres traités | Présence de poussières qui génèrent un voile Pas de différence très nette entre les 2 verres | |
| Test au chiffon | Très sale, mais poussières « faciles à décoller » | Très sale, mais impression de « gras » | Très sale dans les 2 cas Pas de différence très nette entre les 2 verres | |
| Hydrophilie | Mouillant | Non mouillant | Mouillant | Non mouillant |

La différence de comportement dans la zone d'entrée peut s'expliquer par :
- la présence d'UVA qui entrent dans le tunnel, et permettent à la couche TiO₂ d'être plus performante
- des pollutions moins confinées qu'en zone centrale

Dans la partie centrale, on observe une pollution des verres, même traités, et un caractère hydrophile maintenu pour les verres traités. Par contre, pour les luminaires traités contenant les lampes fluo (émission d'UVA et donc activation de la couche), la pollution se présente sous forme de poussières sèches qui se détachent très facilement de la surface. Sur les verres non traités on observe une adhésion forte avec la présence de pollutions grasses.

Ainsi les inventeurs mettent-ils à disposition des lampes durablement propres et/ou faciles à nettoyer dans les conditions d'illumination les plus faibles, et de pollution les plus fortes.

## Revendications

1. Procédé de fabrication d'un dispositif d'éclairage comprenant une source de lumière et une paroi laissant passer une partie au moins du rayonnement émis par ladite source, ladite paroi étant essentiellement constituée de verre trempé de telle sorte qu'une surface de 50 x 50 mm se casse en 40 morceaux au moins, et étant revêtue sur une partie au moins d'une au moins de ses deux faces d'une couche photocatalytiquement active comprenant TiO₂. laquelle est formée en structure mésoporeuse par voie sol-gel comprenant :
• la préparation d'une composition liquide comprenant au moins un précurseur du matériau essentiellement minéral constituant la structure mésoporeuse de ladite couche et au moins un agent structurant organique,
• la précipitation du précurseur autour de l'agent structurant organique et la croissance de molécules dérivées du précurseur,
• l'ajout dans la composition liquide de nanoparticules ou de cristallites élémentaires d'oxyde de titane éventuellement dopé, de diamètres compris entre 0,5 et 100 nm,
• l'application de la composition sur la surface à revêtir,
• l'élimination de l'agent structurant organique, les cristallites d'oxyde de titane étant incorporées dans la structure mésoporeuse tout en y préservant essentiellement leur intégrité, plusieurs d'entres elles pouvant y être agrégées en nanoparticules,
ledit procédé étant tel que ne sont pas mises en oeuvre des températures supérieures à 250 °C, de manière à préserver une trempe classique de verre.

2. Dispositif d'éclairage susceptible d'être obtenu par le procédé de la revendication 1.

3. Dispositif d'éclairage selon la revendication précédente, **caractérisé en ce que** le verre de la paroi est trempé de telle sorte qu'une surface de 50 x 50 mm se casse en plus de 60 morceaux.

4. Dispositif d'éclairage selon l'une des revendications 2 ou 3, **caractérisé en ce qu'**au moins dans une zone de sa surface orientée vers ladite couche photocatalytiquement active, ladite paroi en verre ne comporte pas d'oxydes alcalins et alcalino-terreux en proportion totale excédant 15 % en poids, ni d'oxyde de sodium en proportion excédant 10 % en poids.

5. Dispositif d'éclairage selon l'une des revendications 2 à 4, **caractérisé en ce qu'**entre ladite paroi et ladite couche photocatalytiquement active est intercalée une couche barrière à la diffusion des alcalins du verre, ou anti-rayures, notamment à base de silicium.

6. Dispositif d'éclairage selon l'une des revendications 2 à 5, **caractérisé en ce que** ladite couche photocatalytiquement active a une épaisseur comprise entre 100 et 1000 nm, et contient 1) à 100, de préférence 2 à 65 µg/cm² de TiO₂.

7. Dispositif d'éclairage selon l'une des revendications 2 à 6, **caractérisé en ce qu'**il comprend un moyen d'aspersion de liquide sur ladite couche photocatalytiquement active.

8. Dispositif d'éclairage selon l'une des revendications 2 à 7, **caractérisé en ce que** ladite paroi est revêtue au moins sur sa face opposée à ladite source de lumière de ladite couche photocatalytiquement active.

9. Dispositif d'éclairage selon l'une des revendications 2 à 8, **caractérisé en ce que** ladite couche comprend TiO₂ dopé par Fe, Nb, Ta, Pt, Rh, Ag, Pd, Sn, Cd, W, Ce, Zr, Cu, Ru, Mo, Al, Bi, V, Co et/ou Ni, éventuellement leurs oxydes et/ou sels, notamment sous forme particulaire de dimensions plus petites que celles des particules de TiO₂ et en mélange intime ou alliage avec celles-ci.

10. Application du dispositif d'éclairage selon l'une des revendications 2 à 9 à l'éclairage d'un tunnel, l'éclairage public, des pistes d'aéroport, ou à des phares ou feux de signalisation de véhicules de transport terrestres, aquatiques ou aériens, notamment de véhicules automobiles, ainsi qu'à l'éclairage d'intérieur.

## Claims

1. A process for manufacturing a lighting device comprising a light source and a wall that lets at least a portion of the radiation emitted by said source pass therethrough, said wall being essentially made of glass that is toughened in such a way that an area measuring 50 x 50 mm breaks into at least 40 fragments, said wall being coated over at least a portion of at least one of its two faces with a photocatalytically active layer comprising TiO₂, said active layer being formed as a mesoporous structure by a sol-gel method comprising:
• the preparation of a liquid composition comprising at least one precursor of the essentially mineral material constituting the mesoporous structure of said layer and at least one organic structuring agent;
• the precipitation of the precursor around the organic structuring agent and the growth of molecules derived from the precursor;
• the addition into the liquid composition of elementary crystallites or nanoparticles of optionally doped titanium oxide, with diameters between 0.5 and 100 nm;
• the application of the composition to the surface to be coated;
• the elimination of the organic structuring agent, the titanium oxide crystallites being incorporated into the mesoporous structure while essentially maintaining their integrity, it being possible for several of them to be aggregated as nanoparticles therein,
said process being carried out at temperatures not exceeding 250°C, so as to preserve conventional toughening of glass.

2. A lighting device likely to be obtained according to the process of Claim 1.

3. The lighting device as claimed in preceding claim , **characterized in that** the glass of the wall is toughened in such a way that an area measuring 50 x 50 mm breaks into more than 60 fragments.

4. The lighting device as claimed in claim 2 or 3, **characterized in that**, at least in one region of its surface directed toward said photocatalytically active layer, the total content of alkali and alkaline-earth metal oxides of said glass wall does not exceed 15% by weight, while the sodium oxide content does not exceed 10% by weight.

5. The lighting device as claimed in one of claims 2 to 4, **characterized in that** a barrier layer, preventing the diffusion of alkali metals from the glass, or a scratch-resistant layer, especially based on silicon, is inserted between said wall and said photocatalytically active layer.

6. The lighting device as claimed in one of claims 2 to 5, **characterized in that** said photocatalytically active layer has a thickness of between 100 and 1000 nm and contains 1 to 100 µg/cm², preferably 2 to 65 µg/cm², of TiO₂.

7. The lighting device as claimed in one of claims 2 to 6, **characterized in that** it includes means for spraying liquid onto said photocatalytically active layer.

8. The lighting device as claimed in one of claims 2 to 7, **characterized in that** said wall is coated at least on its face opposite said light source with said photocatalytically active layer.

9. The lighting device as claimed in one of claims 2 to 8, **characterized in that** said layer comprises TiO₂ doped with Fe, Nb, Ta, Pt, Rh, Ag, Pd, Sn, Cd, W, Ce, Zr, Cu, Ru, Mo, Al, Bi, V, Co and/or Ni, optionally their oxides and/or salts, especially in particulate form with dimensions smaller than those of the TiO₂ particles and intimately blended or alloyed therewith.

10. The application of the lighting device as claimed in one of claims 2 to 9 to the lighting of a tunnel, to public lighting or the lighting of airport runways, or to headlights or signal lights for transport vehicles, whether on land, on water or in the air, especially motor vehicles, and also to interior lighting.

## Patentansprüche

1. Verfahren zur Herstellung einer Beleuchtungsvorrichtung, die eine Lichtquelle und eine Wand, welche die von dieser Quelle emittierte Strahlung wenigstens teilweise hindurchlässt, umfasst, wobei die Wand im Wesentlichen von vorgespanntem Glas derart gebildet wird, dass eine Fläche von 50 x 50 mm in mindestens 40 Stückchen zerbricht, und sie auf wenigstens einem Teil mindestens einer ihrer zwei Seiten mit einer TiO₂ umfassenden photokatalytisch aktiven Schicht beschichtet wird, die zu einer mesoporösen Struktur auf dem Sol-Gel-Weg gebildet wird, der das:
- Herstellen einer flüssigen Zusammensetzung, die mindestens einen Vorläufer des im Wesentlichen anorganischen Materials, das die mesoporöse Struktur dieser Schicht bildet, und mindestens ein strukturierendes organisches Mittel umfasst,
- Ausfällen des Vorläufers um das strukturierende organische Mittel und das Wachstum der von dem Vorläufer abgeleiteten Moleküle,
- Zugeben von Nanopartikeln oder elementaren Kristalliten aus gegebenenfalls dotiertem Titanoxid mit einem Durchmesser von 0,5 bis 100 nm zu der flüssigen Zusammensetzung,
- Aufbringen der Zusammensetzung auf die zu beschichtende Oberfläche und
- Entfernen des strukturierenden organischen Mittels, wobei die Titanoxidkristallite in die mesoporöse Struktur eingebaut werden, wobei sie im Wesentlichen ihre Integrität behalten und viele von ihnen zu Nanopartikeln aggregiert werden können,
umfasst, wobei das Verfahren derart ist, dass Temperaturen von über 250°C nicht auftreten, sodass eine herkömmliche Vorspannung des Glases erhalten bleibt.

2. Beleuchtungsvorrichtung, die durch das Verfahren nach Anspruch 1 hergestellt werden kann.

3. Beleuchtungsvorrichtung nach dem vorhergehenden Anspruch, **dadurch gekennzeichnet, dass** das Glas der Wand derart vorgespannt ist, dass eine Fläche von 50 x 50 mm in mehr als 60 Stückchen zerbricht.

4. Beleuchtungsvorrichtung nach Anspruch 2 oder 3, **dadurch gekennzeichnet, dass** die Glaswand wenigstens in einem Bereich ihrer Oberfläche, die der photokatalytisch aktiven Schicht zugewandt ist, weder Alkali- und Erdalkalimetalloxide mit einem Gesamtanteil, der 15 Gew.-% übersteigt, noch Natriumoxid mit einem Anteil, der 10 Gew.-% übersteigt, enthält.

5. Beleuchtungsvorrichtung nach einem der Ansprüche 2 bis 4, **dadurch gekennzeichnet, dass** zwischen der Wand und der photokatalytisch aktiven Schicht eine Barriereschicht gegen die Diffusion von Alkaliionen aus dem Glas oder eine kratzfeste Schicht, insbesondere auf der Basis von Silicium, eingefügt ist.

6. Beleuchtungsvorrichtung nach einem der Ansprüche 2 bis 5, **dadurch gekennzeichnet, dass** die photokatalytisch aktive Schicht eine Dicke von 100 bis 1000 nm besitzt und 1 bis 100 µg/cm² und vorzugsweise 2 bis 65 µg/cm² TiO₂ enthält.

7. Beleuchtungsvorrichtung nach einem der Ansprüche 2 bis 6, **dadurch gekennzeichnet, dass** sie ein Mittel zum Aufsprühen einer Flüssigkeit auf die photokatalytisch aktive Schicht umfasst.

8. Beleuchtungsvorrichtung nach einem der Ansprüche 2 bis 7, **dadurch gekennzeichnet, dass** die Wand auf wenigstens der der Lichtquelle abgewandten Seite mit der photokatalytisch aktiven Schicht beschichtet ist.

9. Beleuchtungsvorrichtung nach einem der Ansprüche 2 bis 8, **dadurch gekennzeichnet, dass** die Schicht TiO₂, das mit Fe, Nb, Ta, Pt, Rh, Ag, Pd, Sn, Cd, W, Ce, Zr, Cu, Ru, Mo, Al, Bi, V, Co und/oder Ni, gegebenenfalls deren Oxiden und/
oder Salzen, insbesondere in Form von Teilchen mit Abmessungen, die kleiner als diejenigen der TiO₂-Teilchen sind, und in innigem Gemisch oder Legierung mit diesen dotiert ist, umfasst.

10. Verwendung der Beleuchtungsvorrichtung nach einem der Ansprüche 2 bis 9 für die Beleuchtung eines Tunnels, die öffentliche Beleuchtung, Luftlandebahnen oder Scheinwerfer bzw. Signallichter von Boden-, Wasser- oder Luftfahrzeugen, insbesondere Kraftfahrzeugen, sowie für die Innenbeleuchtung.
